# FASCICULE DE BREVET EUROPEEN

(11) **EP 0 793 629 B1**
(45) Date de publication et mention de la délivrance du brevet: **15.03.2000**
(21) Numéro de dépôt: 95941127.3
(22) Date de dépôt: 22.11.1995
(51) Int. Cl.: C04B 35/65, C04B 35/80

(54) **NOUVEAUX MATERIAUX FORMES DE GRAINS REFRACTAIRES LIES PAR UNE MATRICE DE NITRURE D'ALIMINIUM OU DE SIALON CONTENANT DU NITRURE DE TITANE**
NEUES MATERIAL AUS FEUERFESTEN KÖRNCHEN, DIE DURCH EINE MATRIX AUS ALUMINIUMNITRID ODER SIALON, TITANTNITRID ENTHALTEND, VERBUNDEN SIND
NOVEL MATERIALS CONSISTING OF REFRACTORY GRAINS BONDED BY A TITANIUM NITRIDE-CONTAINING ALUMINIUM NITRIDE OR SIALON MATRIX

(30) Priorité: 24.11.1994 FR 9414107
(43) Date de publication de la demande: 10.09.1997
(73) Titulaire: SAVOIE REFRACTAIRES, F-69631 Venissieux (FR)
(72) Inventeur: SCHOENNAHL, Jacques, Paul, Raymond, F-69100 Villeurbanne (FR); BITOUZET, Jean-Philippe, Marie, F-69005 Lyon (FR)
(74) Mandataire: Colas, Jean-Pierre
(86) Numéro de dépôt international: FR9501540
(87) Numéro de publication internationale: WO9615999

(56) Documents cités:
- EP-A- 0 322 745
- EP-A- 0 482 981
- EP-A- 0 598 140
- WO-A-92/16472

## Description

L'invention concerne de nouveaux matériaux réfractaires constitués de grains liés par une matrice de nitrure d'aluminium ou de sialon, contenant du nitrure de titane et, facultativement, des particules de graphite et/ou de nitrure de bore dispersées en son sein, ainsi qu'un procédé pour leur fabrication.

La sidérurgie ainsi que la métallurgie de l'aluminium ont besoin de matériaux réfractaires de plus en plus performants et fiables : il s'agit en fait d'améliorer simultanément la résistance à la corrosion, la résistance mécanique à chaud et la résistance aux chocs thermiques.

Les applications concernées principalement sont :
- Les pièces céramiques réfractaires intervenant dans les dispositifs de protection ou de régulation des jets de fonte ou d'acier. Des exemples particuliers de telles pièces sont les plaques d'obturateur à tiroir, les tubes protecteur de jet, les busettes immergées et les quenouilles.
- Les pièces céramiques réfractaires intervenant dans les dispositifs de brassage, soit mécanique, soit par insufflation de gaz, dans le métal en fusion.
- Les briques de siège servant de logement et support aux dispositifs d'insufflation de gaz et aux dispositifs de régulation des jets de métal, ainsi que les dalles d'impact de poche ou de répartiteur.
- Le revêtement intérieur des hauts-fourneaux et, en particulier des étalages, de la ceinture de tuyère et du creuset.
- Les accessoires pour la fonderie de la fonte, de l'acier et des alliages spéciaux tels que busettes, tampons, déversoirs.

La grande diversité des sollicitations auxquelles ces matériaux sont confrontés résulte souvent du fonctionnement discontinu des équipements : il y a choc thermique au début, puis à la fin d'un cycle ; durant un cycle, les pièces réfractaires sont successivement en contact avec le métal puis un laitier en fusion. Enfin, entre deux cycles, les pièces réfractaires qui restent à une température relativement élevée sont soumises à l'action oxydante de l'air ambiant.

Les contraintes mécaniques pures sont toujours présentes: chocs thermiques et contraintes résultant des manutentions, contraintes de confinement créées par une enveloppe métallique extérieure, et enfin dans le cas des systèmes de régulation de jet, contraintes liées à la fonction même des pièces réfractaires, c'est-à-dire mouvements et effets d'obturation.

Enfin, l'on notera également que dans tous les cas, les pièces réfractaires considérées sont soumises à l'action érosive du métal en fusion.

La liste des propriétés souhaitées pour ces matériaux réfractaires s'établit donc ainsi :
- résistance mécanique à chaud élevée pour faire face soit à des contraintes mécaniques, soit aux effets d'érosion par l'écoulement du métal ou du laitier;
- excellente résistance à la corrosion chimique par la fonte, l'acier et les alliages spéciaux ;
- bonne résistance à la corrosion par les laitiers sidérurgiques et les poudres de couverture ;
- propriétés de non mouillabilité par les métaux, les laitiers, et les poudres de couverture de façon à limiter leur infiltration dans les joints, fissures ou porosités, mais aussi à réduire les risques d'accrochage de croûtes solidifiées lors des refroidissements ;
- bonne résistance à l'oxydation par l'air ;
- excellente résistance aux chocs thermiques ;
- caractère non oxydant face à l'aluminium et au calcium dissous dans certains aciers;
- propriétés tribologiques pour les pièces mobiles.

Malgré un environnement complexe et agressif, on exige des pièces réfractaires concernées une grande fiabilité, car toute ruine accidentelle peut avoir des conséquences catastrophiques pour les installations et pour le personnel.

L'emploi de matériaux basés sur un granulat de carbure de silicium, lié par une matrice de sialon, est répandu en tant que briques utilisées pour le revêtement d'un haut fourneau. Dans cette application, le matériau est destiné à résister à un ruissellement permanent de fonte pendant plus de 10 ou 15 ans. Or, le sialon est légèrement soluble dans le fer; l'on recherche donc une matrice liante plus inerte vis-à-vis du métal.

On connaît par EP-A-0480831 des matériaux réfractaires formés d'un granulat à base d'alumine, lié par un liant formé de sialon, utiles pour la fabrication de plaques et busettes pour obturateurs à tiroirs de poches et répartiteurs à acier.

Ces pièces voient leur durée de vie décroître très rapidement dans le cas d'aciers très agressifs, tels que les aciers à ultra-basse teneur en carbone, traités au siliciure de calcium (CaSi), c'est-à-dire contenant une forte teneur en calcium dissous (> 50 ppm).

Enfin, on connaît par EP-A-0482981 et par EP-A-0482984 des matériaux à base de granulats réfractaires divers, liés respectivement par une matrice de nitrure d'aluminium ou de sialon et contenant des particules de graphite et/ou de nitrure de bore dispersées. Ces matériaux sont utiles pour la fabrication de plaques à tiroir, mais surtout pour la fabrication de tubes protecteurs de jet, de busettes immergées et de quenouilles. Les ajouts de BN et de graphite permettent d'obtenir l'excellente résistance au choc thermique requise par ces applications. Toutefois, ces matériaux sont attaqués au niveau de leur matrice liante, dans le cas d'une utilisation de longue durée, face à des aciers agressifs.

Les matériaux de l'art connu cités ont en commun une matrice liante nitrurée, obtenue par frittage réactif in situ sous azote soit d'aluminium, soit d'un mélange d'aluminium, d'alumine et de silicium. Ces matériaux présentent donc tous les caractéristiques spécifiques aux matrices liantes obtenues par frittage réactif sous azote de poudre métallique, à savoir une excellente résistance mécanique à chaud, une faible porosité ouverte et surtout un faible diamètre de pore, garant d'une faible mouillabilité et d'une bonne résistance à l'infiltration par les métaux et laitiers fondus.

La présente invention vise à fournir de nouveaux matériaux et pièces réfractaires basés sur les mêmes granulats, dont les caractéristiques générales sont au moins équivalentes à celles des matériaux et pièces antérieurs, en particulier la faible porosité et la forte résistance mécanique à chaud, mais dont la résistance à la corrosion par les aciers de la matrice est significativement améliorée, ainsi qu'un procédé pour la fabrication de ces matériaux.

Plus particulièrement, l'invention concerne de nouveaux matériaux réfractaires caractérisés en ce qu'ils comprennent, en % en poids :
A] 32 à 87% de particules et/ou grains d'au moins un matériau réfractaire présentant des températures de fusion et de dissociation thermique supérieures à 1700°C, choisi parmi les corindons, la mullite, les matériaux du système alumine-zircone, la magnésie, les zircones pures ou partiellement stabilisées avec la condition que leur grosseur de particules soit d'au moins 50 µm, le spinelle MgO-Al₂O₃, que ces produits soient électrofondus ou frittés ; les matériaux électrofondus présentant une teneur en alumine d'au moins 85 % en poids; les matériaux électrofondus du système alumine-silice-zircone titrant au moins 40 % en alumine et 5 % en zircone ; les oxycarbures d'aluminium des types Al₄O₄C et Al₂OC, les produits à base d'oxynitrure d'aluminium, la bauxite, et les chamottes argileuses réfractaires.
B] 7 à 50% d'une matrice liante formée in situ et constituée majoritairement :
   - soit d'un sialon de formule Si_{6-z}Al_{z}O_{z}N_{8.z} où z vaut 0 à 4, comme déterminé à partir d'un diagramme de diffraction de rayons X ;
   - soit du nitrure d'aluminium AlN de structure hexagonale et/ou d'au moins un des polytypes de AlN désigné dans la notation de Ramsdell par 2H, 8H, 27R, 21R, 12H et 15R, comme déterminé à partir d'un diagramme de diffraction de rayons X ;
   - ou d'un mélange de ces constituants.
C] 2 à 40% d'un matériau à base de nitrure de titane TiN dispersé dans la matrice ; et, facultativement,
D] 0 à 42% de nitrure de bore hexagonal, de carbone amorphe, et/ou de graphite cristallisé dispersé dans la matrice liante.

L'invention concerne aussi des pièces réfractaires devant être exposées au contact d'un métal en fusion, caractérisées en ce qu'elles sont constituées d'un matériau réfractaire comprenant, en % en poids :
A] 32 à 87% de particules et/ou grains d'au moins un matériau réfractaire dont les températures de fusion et de dissociation thermique sont supérieures à 1700°C,
B] 7 à 50% d'une matrice liante formée in situ et constituée majoritairement :
   - soit d'un sialon de formule Si_{6-z}Al_{z}O_{z}N_{8-z} où z vaut 0 à 4, comme déterminé à partir d'un diagramme de diffraction de rayons X ;
   - soit du nitrure d'aluminium AlN de structure hexagonale et/ou d'au moins un des polytypes de AlN désigné dans la notation de Ramsdell par 2H, 8H, 27R, 21R, 12H et 15R, comme déterminé à partir d'un diagramme de diffraction de rayons X ;
   - ou d'un mélange de ces constituants.
C] 2 à 40% d'un matériau à base de nitrure de titane TiN dispersé dans la matrice ; et, facultativement,
D] 0 à 42% de nitrure de bore hexagonal, de carbone amorphe, et/ou de graphite cristallisé dispersé dans la matrice liante.

Les matériaux réfractaires constituant les grains ou particules [A], sont choisi parmi les corindons, la mullite, les matériaux du système alumine-zircone, la magnésie, les zircones pures ou partiellement stabilisées avec la condition que leur grosseur de particules soit d'au moins 50 µm, le spinelle MgO-Al₂O₃, que ces produits soient électrofondus ou frittés ; les matériaux électrofondus présentant une teneur en alumine d'au moins 85 % en poids; les matériaux électrofondus du système alumine-silice-zircone titrant au moins 40 % en alumine et 5 % en zircone ; les oxycarbures d'aluminium des types Al₄O₄C et Al₂OC, les produits à base d'oxynitrure d'aluminium, la bauxite et les chamottes argileuses réfractaires. Le choix de la nature des grains ou particules utilisés sera fonction de l'application particulière visée : ils contribuent spécifiquement à la résistance à la corrosion, à l'érosion ou à l'abrasion du matériau, ainsi qu'à sa conductivité thermique. Ils sont employés essentiellement pour abaisser le coût de fabrication des produits.

L'invention concerne aussi l'utilisation, au contact d'un metal en fusion d'un piece réfractaire comme décrit dans le revendications 17 à 23.

La proportion des grains ou particules [A] dans les matériaux et pièces de l'invention peut varier largement en fonction des propriétés recherchées pour le matériau. La proportion de [A] peut aller de 32 à 87% en poids environ. A l'heure actuelle, on préfère une proportion de 36 à 68% en poids environ. La teneur en granulat [A] est habituellement déterminée de façon à compléter à 100% la composition du matériau après fixation des teneurs en [B], [C] et [D].

La granulométrie du constituant [A] (appelé aussi "granulat") peut varier largement selon la nature dudit constituant et les propriétés recherchées pour le matériau ou pièce final. De façon large, les particules ou grains du constituant [A] peuvent avoir une grosseur comprise dans la gamme de 1 µm à 10 mm. Des particules plus petites que 1 µm ne sont pas avantageuses car trop onéreuses à fabriquer ou susceptibles de présenter une réactivité indésirable ou trop élevée. Des grains plus gros que 10 mm sont peu souhaitables car ils donnent un matériau d'aspect médiocre et ne conviennent pas pour la fabrication de pièces minces.

La phase liante [B], qui lie les grains [A] entre eux, est constituée majoritairement de sialon de formule Si_{6-z}Al_{z}O_{z}N_{8-z} où z vaut de 0 à 4 et de préférence de 2,5 à 3,5 ou de nitrure d'aluminium AlN ou d'un polytype du nitrure d'aluminium ou d'un mélange de ces constituants.

La proportion de la phase liante [B] peut, elle aussi, varier largement. La proportion de la phase liante [B] peut aller de 7 à 50% en poids environ. Les plages sont déterminées pour la valeur basse par le besoin de conserver au matériau de bonnes propriétés en termes de porosité et de résistance mécanique, et pour la valeur haute par des considérations économiques qui conduisent à utiliser autant de constituant (A) que possible.

Le plus fréquemment, la proportion de liant [B] sera choisie en fonction du type de constituant [A] utilisé.

En gros, on peut distinguer trois types principaux de matériaux :
- les matériaux à granulat [A] grossier, c'est-à-dire ceux dont le constituant [A] est formé à raison d'au moins 90% en poids par des grains d'un diamètre compris entre 50 µm et 10 mm. Ces matériaux à granulat grossier contiennent avantageusement une proportion de liant [B] relativement faible, par exemple de 7 à 18% en poids, de préférence 12 à 18%, et sont des matériaux de coût relativement peu élevé, dotés de propriétés de porosité et de résistance mécanique acceptables ;
- les matériaux à granulat [A] fin, c'est-à-dire dont le constituant [A] est formé à raison d'au moins 90% en poids par des particules d'un diamètre inférieur à 50 µm. Ces matériaux à granulat fin contiennent avantageusement une proportion de liant [B] relativement élevée, par exemple de 30 à 50% en poids, de préférence 30 à 45% et sont des matériaux pourvus de caractéristiques mécaniques excellentes (résistance à la flexion à froid très élevée) et de très bonnes propriétés tribologiques obtenues grâce à la forte teneur en liant (faible coefficient de frottement, faible abrasivité face aux autres céramiques et aux métaux). De plus, ils permettent de réaliser des pièces dont les tolérances dimensionnelles sont très faibles. En revanche, leur coût de fabrication est sensiblement plus élevé que celui des matériaux à granulat grossier ;
- les matériaux à granulat [A] mixte, c'est-à-dire formé d'un mélange de grains relativement gros et de particules relativement fines, qui sont doté de propriétés intermédiaires. Ces matériaux contiendront habituellement une proportion de liant [B] moyenne, par exemple de 15 à 35% en poids.

Les teneurs en liant des types principaux susmentionnés ne sont données qu'à titre indicatif, des facteurs divers, tels que la résistance à la corrosion ou la résistance au choc thermique propre au granulat sélectionné, peuvent intervenir et amener à sortir des gammes de proportions recommandées pour chaque type.

Le constituant [C] peut être tout matériau à base de nitrure de titane. Par exemple, ce peut être une poudre de nitrure de titane d'une pureté supérieure à 99%, ou une poudre d'une solution solide TiN-TiC titrant au maximum 30% de TiC et qui a l'avantage de conduire à de bonnes performances tout en ayant un prix de revient réduit par rapport au TiN pur.

La proportion du constituant [C] peut varier de 2 à 40%, de préférence 2 à 20%. A l'heure actuelle, on préfère tout particulièrement incorporer 5 à 15% de [C]. De préférence, au moins 90% des particules du constituant [C] sont comprises entre 1 et 100 µm.

L'ingrédient [D] facultativement dispersé dans la phase liante peut être constitué de nitrure de bore, de carbone amorphe, de graphite cristallisé ou d'un mélange de ceux-ci. Le graphite cristallisé est de préférence sous forme de paillettes. L'ingrédient [D] peut contribuer à améliorer la tenue au choc thermique des matériaux ou pièces, ainsi que leur non mouillabilité par les métaux et laitiers, ainsi que les propriétés tribologiques.

La proportion de particules [D] peut également varier largement. La proportion de particules [D] peut aller de 0 à 42% en poids. A l'heure actuelle, on préfère une proportion de 5 à 30% environ.

L'invention concerne aussi un procédé de fabrication de matériaux réfractaires selon l'invention.

Ce procédé se caractérise en ce que :
1. On prépare une charge de départ comprenant un mélange des constituants suivants dans les proportions indiquées:
a) 32 à 90% en poids, de préférence 40 à 75% de grains et/ou particules constitués d'un matériau réfractaire dont la température de fusion et la température de dissociation thermique éventuelle sont supérieures à 1700°C ;
b) 6 à 42% en poids d'un mélange de poudres réactives consistant essentiellement en :

### 1. Dans le cas d'une matrice de sialon

(i) 23 à 90%, de préférence 25 à 45%, de poudre de silicium dont au moins 90% des particules ont un diamètre inférieur à 150 µm,
(ii) 0 à 62, de préférence 30 à 55%, d'alumine calcinée dont au moins 90% des particules ont un diamètre inférieur à 20 µm,
(iii) 0 à 28%, de préférence 11 à 25%, de poudre d'aluminium dont au moins 90% des particules ont un diamètre inférieur à 80 µm, le total des constituants (i) à (iii) représentant 100% et le rapport des proportions d'aluminium et d'alumine calcinée étant inférieur à 0,7.

### 2. Dans le cas d'une matrice liante de nitrure d'aluminium

100% de poudre d'aluminium dont au moins 90% des particules ont un diamètre inférieur à 80 µm.

### 3. Dans le cas d'une matrice liante constituée de l'un des polytypes du nitrure d'aluminium

85 à 25% en poids de poudres de silicium et d'aluminium dans un rapport maximal poudre de Si/poudre Al de 0,8 combinées avec de l'alumine calcinée dans une proportion de 15 à 75% en poids. De préférence, on utilise un mélange comprenant, en poids :
(i) 10 à 20% de poudre de silicium dont au moins 90% des particules ont un diamètre inférieur à 150 µm,
(ii) 25 à 65% d'alumine calcinée dont au moins 90% des particules ont un diamètre inférieur à 20 µm,
(iii) 25 à 60% de poudre d'aluminium dont au moins 90% des particules ont un diamètre inférieur à 80 µm, le total des constituants (i) à (iii) représentant 100%.

c) 2 à 43% de poudre d'un matériau à base de nitrure de titane dont, de préférence, au moins 90% des particules ont un diamètre compris entre 1 et 100 µm;
d) 0 à 44% en poids, de préférence 5 à 33%, de particules de nitrure de bore hexagonal, de particules de carbone amorphe, de particules de graphite cristallisé ou d'un mélange de celles-ci.
e) 0 à 3% d'une argile réfractaire séchée et broyée, le total des ingrédients de (a) à (e) faisant 100 % et
f) une petite quantité de liant temporaire.

2. On met le mélange résultant à la forme désirée par pressage ;
3. On sèche le mélange conformé ; et
4. On cuit le mélange conformé et séché sous atmosphère à base d'azote à une température de 1300°C à 1600°C.

Pour assurer l'obtention de la matrice liante de sialon préférée ayant la formule indiquée où z = 2,5 à 3,5, on a trouvé qu'il y avait lieu d'utiliser un mélange de poudres réactives comprenant, en poids, (i) 25-45% de la poudre de silicium, (ii) 30-55% de l'alumine calcinée, et (iii) 11-25% de la poudre d'aluminium.

La mise en forme effectuée dans l'étape 2 peut s'effectuer par un pressage uniaxial ou isostatique, de façon classique. Le rôle de l'argile (e) est celui d'un additif de pressage facilitant la mise en forme.

L'étape de séchage 3 peut être effectuée à une température modérément élevée, par exemple de 100 à 200°C, de préférence vers 150°C.

La durée de l'étape de cuisson 4 peut varier largement en fonction notamment de la taille de l'article conformé et séché. A titre indicatif, une durée de maintien de 4 à 10 heures environ à une température de 1300-1600°C est habituellement satisfaisante. L'expression "atmosphère à base d'azote" signifie une atmosphère dont le constituant principal est l'azote. Une telle atmosphère peut contenir d'autres gaz en proportions minoritaires, tels que des gaz inertes (Argon par exemple), de l'hydrogène, ou du monoxyde de carbone.

On notera qu'il existe une différence entre les teneurs en granulat, nitrure de titane, graphite et nitrure de bore du mélange initial et la proportion des mêmes constituants dans le produit fini, puisque la cuisson s'accompagne d'une fixation d'azote et donc d'une prise de poids.

Les grains et/ou particules (a) peuvent avoir une grosseur comprise dans la gamme de 1 µm à 10 mm, comme indiqué plus haut pour le constituant [A] . Les grains et/ou particules (a) peuvent être choisis parmi les matériaux définis ci-dessus pour le constituant [A]. En ce qui concerne les particules (a) d'une grosseur inférieure à 50 µm, il faut toutefois éviter l'utilisation de la zircone pure ou stabilisée qui peut, sous cette forme finement divisée et dans les conditions de cuisson, réagir avec l'azote pour former du ZrN qui, en service, s'oxyde facilement et peut provoquer une défaillance du matériau.

Les grains et/ou particules (a) peuvent être constitués d'un seul type de matériau réfractaire ou d'un mélange de matériaux réfractaires. En particulier, on peut utiliser un mélange de grains (>50 µm) d'un matériau réfractaire et de particules (<50 µm) d'un autre matériau réfractaire, en des proportions respectives de 32-90% et 1-25% en poids.

A ce jour, on préfère que les grains et/ou particules (a) contiennent au moins une petite quantité (> 1% en poids) d'alumine d'une grosseur de particules inférieure à 50µm lorsque la matrice liante (B) est du nitrure d'aluminium ou un polytype du nitrure d'aluminium.

Le mélange (b) de poudres réactives représente 6-42% en poids de la charge de départ. De préférence, on utilisera, pour la préparation d'un matériau à granulat fin, 25-38% en poids de mélange (b), et, pour la préparation d'un matériau à granulat grossier, 10-15% en poids dudit mélange (b).

Dans le mélange (b), les particules d'alumine calcinée (ii) sont des particules d'alumine réactive qui réagissent avec les ingrédients (i) et (iii) lors de l'étape de cuisson sous azote, pour former la phase sialon ou un polytype de AlN.

Le constituant à base de nitrure de titane (c) est de préférence du nitrure de titane sensiblement pur, mais on peut se contenter aussi d'une poudre de solution solide TiN-TiC contenant jusqu'à environ 30% en poids de TiC.

L'ingrédient (d) peut être constitué de particules de BN hexagonal ou de carbone amorphe (par exemple du noir de carbone) ou de particules de graphite. Ces particules peuvent être fines ou grossières. L'ajout de particules ou paillettes relativement grossières (> 40 µm et de préférence > 100 µm) de graphite est avantageux lorsqu'on recherche une amélioration de la résistance aux chocs thermiques du matériau final. Par contre, l'ajout de noir de carbone (particules fines de C) est avantageux lorsqu'on désire améliorer la résistance à la corrosion du matériau final.

Le liant temporaire (f) peut être constitué de tout liant temporaire connu. A titre d'exemple, on peut citer les résines phénoliques, les alcools furfuryliques et polyvinyliques, des solutions aqueuses de dextrine ou de carboxyméthyl-cellulose, ou de lignosulfonate de calcium. A titre indicatif, une quantité de liant temporaire de l'ordre de 1 à 4% en poids environ, par rapport au total des ingrédients (a) à (e) s'est révélée habituellement satisfaisante pour assurer au matériau une bonne tenue à cru sans détériorer, de façon sensible, ses propriétés générales.

L'invention est illustrée, de façon non limitative, par les exemples suivants. Dans ces exemples, on a préparé des briques d'essai de 220 x 110 x 60 mm par un processus dans lequel les constituants de départ ont été mélangés par charge de 10 kg, dans un malaxeur Bonnet, mis à la forme de briques à l'aide d'une presse hydraulique exerçant une pression de 1000 bars, séchés à 150°C, puis cuits sous azote, dans un four électrique industriel, à une température de 1300 à 1600°C pendant 4 à 10 heures, selon les cas.

Les propriétés des matériaux ont été déterminées par les essais suivants :

Résistance à la flexion à chaud : mesurée à l'air, après un échauffement accéléré pour limiter les effets de l'oxydation (Des mesures effectuées sous Argon conduisent, en général, à des valeurs beaucoup plus élevées, mais ce test est très coûteux).

Résistance au choc thermique : nous l'exprimons par la perte, en %, de résistance à la flexion à froid mesurée sur des barreaux 125 x 25 x 25 mm après le traitement suivant :

Introduction brutale des éprouvettes à température ambiante dans un four chauffé à 1200°C, maintien pendant 30 mn, puis trempe des éprouvettes dans de l'eau froide.

Résistance à la corrosion par l'acier, la fonte et les alliages spéciaux :
Elle est évaluée par la méthode dite de l'auto-creuset : le creuset est constitué d'un bloc du réfractaire à étudier, de format 110 x 110 x 60 mm. Sur une des grandes faces, on creuse, à l'aide d'un foret diamanté, un trou de diamètre 24 mm et de profondeur 40 mm. L'on introduit dans le creuset ainsi réalisé une quantité fixe d'acier (30 à 40 g). Le creuset est recouvert d'un couvercle 110 x 110 x 10 mm, constitué du même matériau, puis placé dans un four électrique où il sera chauffé à l'air, à une température déterminée et pendant un temps déterminé.

Après refroidissement, on scie le creuset dans le sens vertical selon un plan de symétrie, et l'on observe les dégradations du réfractaire à l'interface métal/réfractaire. On procède également à la mesure de l'épaisseur corrodée, par référence au diamètre initial.

Ce test, très agressif car réalisé dans des conditions oxydantes, n'a toutefois qu'une valeur relative. C'est pourquoi, dans chaque cuisson, l'on inclut un creuset d'un produit de référence dont le comportement en service est connu. Le degré de corrosion est alors exprimé sous forme d'un indice, qui est égal à 100 fois l'usure en mm du creuset constitué du produit étudié, divisé par l'usure en mm du produit de référence.

Dans les exemples cités ci-après, les conditions des tests étaient les suivantes :
- Acier : XC38 ;
- Température : 1600°C ;
- Temps de maintien : 3h.
Dans les exemples, on a utilisé les matières premières suivantes :
- Carbure de silicium vendu par la Société Péchiney Électrométallurgie. Sous l'appellation Arbina Cristallisé. Il s'agit d'un matériau constitué essentiellement de la variété SiC alpha et contenant en moyenne 98,5% de SiC à l'analyse chimique.
- Corindon noir électrofondu répondant à l'analyse suivante en % en poids : Al₂O₃ = 96 %, TiO₂ = 3%, SiO₂ = 0,6%, Fe₂O₃ = 0,2 %, CaO + MgO + Na₂O + K₂O = 0,2 %.
- Alumine fine calcinée du commerce titrant au moins 99,5% d'Al₂O₃, ayant une grosseur moyenne de particules d'environ 5 µm avec 90 % des particules comprises entre 1 et 20 µm.
- Alumine tabulaire vendue par la Société ALCOA sous l'appellation "Tabular Alumina T 60" dont 95% des particules sont plus petites que 45µm. L'alumine tabulaire est une alumine calcinée, frittée à haute température, et broyée.
- Silicium en poudre du commerce, vendu sous l'appellation "Silicium T140" par la Société Péchiney Electrométallurgie, dont au moins 90 % des particules ont une grosseur inférieure à 150 µm.
- Aluminium en poudre du commerce, vendu sous l'appellation "Aluminium 200 TV" par la Société Péchiney Electrométallurgie, dont au moins 90 % des particules ont une grosseur inférieure à 80 µm.
- Graphite naturel cristallisé sous forme de paillettes, en provenance de Chine ou de Madagascar, ayant une teneur en cendres inférieure à 17 % en poids et dont au moins 80 % des particules ont une grosseur supérieure à 100 µm.
- Nitrure de bore hexagonal, vendu sous l'appellation HCST-AO5 par la Société Herman C. Starck. Ce nitrure est formé d'agglomérats d'une grosseur de 1 à 10 µm constitués de feuillets individuels d'une grosseur de 0,5 à 1 µm environ.
- Argile broyée, vendue sous l'appellation "DA.40/42" par la Société Denain Anzin Minéraux, répondant à l'analyse chimique suivante, en % en poids : Al₂O₃ = 36%, SiO₂ = 47%, Fe₂O₃ = 1,8%, TiO₂ = 1,8%, CaO + MgO + Na₂O + K₂O = 0,8%, perte au feu : 12,6%.
- Nitrure de Titane : de la qualité T1153 commercialisée par la Société CERAC, cette poudre contient 99,5 % de TiN et le diamètre maximum des grains est inférieur à 50 µm.
- Spinelle : un spinelle MgO-Al₂O₃ électrofondu titrant 69% Al₂O₃ et 30% MgO, commercialisé par la Société Péchiney ;
- Magnésie frittée : une magnésie vendue sous l'appellation Nedmag 99 par la Société Billiton Refractories et répondant aux spécifications suivantes : MgO > 98%, SiO₂ < 1%, B₂O₃ < 0,05%, avec un rapport CaO/SiO₂ > 2 ;
- Alumine-Zircone : un grain fondu Al₂O₃-ZrO₂ titrant 39% ZrO₂ et 60% Al₂O₃ vendu par la Société Norton sous l'appellation Nz Alundum.

Les exemples non limitatifs suivants sont donnés en vue d'illustrer l'invention.

### EXEMPLE 1

On a préparé, par le mode opératoire général décrit ci-dessus, 6 échantillons A à F formés de grains de corindon à liant sialon-TiN, ces mélanges se différenciant entre eux par la proportion de TiN dans la charge de départ, ainsi que dans le produit final.

Le tableau 1 récapitule les constituants de la charge de départ et leurs proportions en % en poids et diverses propriétés des matériaux obtenus, en regard de celles de la composition de référence R1 en dehors de l'invention.

On voit que les additions de TiN améliorent rapidement la tenue à la corrosion par l'acier du matériau. Au-delà de 20% de TiN on note pourtant une dégradation du comportement au test de corrosion. Cette dégradation est essentiellement due au caractère oxydant de ce test.

Des additions supérieures à 20% de TiN sont cependant intéressantes pour des applications en conditions peu oxydantes (voir l'Exemple 8).

La résistance mécanique à chaud à 1500°C se maintient, elle, à un niveau élevé jusqu'à 30 % de TiN.

### EXEMPLE 2

On a préparé les mélanges R2 et R3 formés de grains de corindon, de poudres métalliques destinées à la synthèse du sialon et de poudre de titane métallique destinée à la synthèse de TiN in situ. Ces exemples sont en dehors de l'invention.

Dans ces essais, la poudre de titane métallique était la qualité T1146 de pureté supérieure 99,5 % et dont au moins 90% des particules ont un diamètre inférieur à 75 µm, fournie par la Société CERAC.

Le tableau 2 récapitule les constituants de la charge de départ et leurs proportions en % en poids, en regard de la composition C rentrant dans le cadre de l'invention.

Les échantillons ont été préparés selon le mode opératoire décrit ci-dessus.

Après cuisson, les échantillons R2 et R3 sont complètement désagrégés.

Cet essai montre que la formation de TiN in situ à partir de poudre de titane métallique, associée ou non à des poudres métalliques d'aluminium ou de silicium, n'est pas adaptée à la réalisation des matériaux réfractaires dont il est question dans l'invention.

L'obtention d'une matrice liante compacte, de faible porosité, résistante mécaniquement, nécessite donc la dispersion de poudre de nitrure de titane présynthétisée dans un mélange de poudre d'aluminium, et/ou de silicium qui produiront elles le frittage réactif sous azote recherché.

### EXEMPLE 3

On a préparé, selon le mode opératoire décrit ci-dessus, deux échantillons G et H formés de grains de corindon, dont la matrice liante contient du nitrure de titane et, respectivement, AlN et AlN15R. Le tableau 3 récapitule les constituants de la charge de départ, leurs proportions et diverses propriétés des matériaux obtenus. L'échantillon C rappelle les caractéristiques d'un produit à matrice liante sialon-TiN.

Il apparaît que l'invention s'applique également aux liants réactifs AlN et AlN15R. Ces derniers permettent d'augmenter sensiblement la résistance à la flexion des matériaux, ainsi que la résistance à la corrosion par l'acier comparativement au sialon. Ils sont toutefois un peu plus sensibles au choc thermique.

### EXEMPLE 4

On a préparé par le mode opératoire décrit ci-dessus, 7 échantillons référencés B et I à N formés de grains de corindon à liant sialon-TiN à partir d'une charge de départ contenant respectivement diverses proportions de paillettes de graphite.

Le tableau 4 récapitule les constituants de la charge de départ et leurs proportions en % en poids et diverses propriétés des matériaux obtenus. L'échantillon R4, présenté à titre indicatif, est hors du cadre de l'invention. Il a été préparé selon EP-A-0482984 et correspond à un matériau actuellement couramment utilisé pour les busettes immergées.

On observe une amélioration sensible de la résistance au choc thermique pour une teneur en graphite (mesurée sur le produit final) supérieure à 4 %.

Pour les très hautes teneurs en graphite (échantillon M), la résistance au choc thermique est voisine de celle du produit d'alumine-graphite à liant sialon R4 de même teneur en graphite. On observe également une amélioration spectaculaire de la résistance à la corrosion par l'acier par l'ajout de 5% de TiN.

### EXEMPLE 5

On a préparé selon le mode opératoire décrit ci-dessus un échantillon O formé de grains de corindon à liant AlN contenant 8 % de nitrure de bore et 3 % de TiN. Le tableau 5 récapitule les constituants de la charge de départ, leurs proportions et diverses propriétés du matériau obtenu. L'échantillon R5, cité à titre comparatif, est en dehors du cadre de l'invention.

On observe une amélioration sensible de la résistance à la corrosion par l'acier, et ceci pour un ajout faible de TiN.

On observe également que la résistance mécanique à chaud se maintient à un niveau élevé et que la résistance au choc thermique n'est pas affectée.

### EXEMPLE 6

On a préparé, selon le mode opératoire décrit ci-dessus, 4 échantillons formés de grains de diverse nature liés par une matrice liante de sialon contenant 8,3 % de nitrure de titane dispersé au sein de la matrice liante.

Le tableau 6 résume les constituants de la charge de départ ainsi que leurs proportions et donne les propriétés des matériaux obtenus.

Les excellentes propriétés physiques obtenues montrent que l'invention s'applique à la plupart des granulats réfractaires usuels.

Les granulats basiques, de type spinelle ou magnésie, seront préférés pour les applications où la corrosion par un laitier basique ou une poudre de couverture, est la contrainte prépondérante, ou encore dans le cas d'alliages spéciaux.

Le granulat d'alumine-zircone sera préféré pour les applications où le choc thermique sera prépondérant, telles que par exemple, dans le cas des plaques d'obturateur à tiroir.

Le granulat de SiC sera surtout utilisé dans le haut fourneau où l'on souhaite une excellente résistance à l'abrasion et une conductivité thermique élevée.

### EXEMPLE 7

On a préparé, par le mode opératoire général décrit ci-dessus, un échantillon T formé de particules d'alumine tabulaire fine (<45 µm), de nitrure de bore, de graphite et d'un liant sialon-TiN.

Le tableau 7 récapitule les constituants de la charge de départ et leurs proportions en % poids et diverses propriétés au regard de celles de la composition de référence R6, en dehors de l'invention.

La comparaison des caractéristiques de T et R6 montre l'intérêt d'ajouter du nitrure de titane aux compositions à structure fine et à forte teneur en liant pour améliorer leur résistance à la corrosion par l'acier.

### EXEMPLE 8

On a préparé, selon le mode opératoire général décrit ci-dessus, des échantillons U à X selon l'invention et deux échantillons R7 et R8, en dehors de l'invention, en faisant varier la proportion de TiN.

Pour les tests de corrosion, on a noyé les creusets préparés tels que décrits ci-dessus dans un béton réfractaire afin de réduire le caractère oxydant du test.

Le Tableau 8 récapitule les constituants de la charge de départ et leurs proportions en % en poids, les propriétés des matériaux résultants et la composition minéralogique de ces derniers.

On voit que, dans ces conditions moins oxydantes, même de faibles additions de TiN améliorent la tenue à la corrosion par l'acier. En revanche, un ajout excessif (au-delà de 40%) provoque une dégradation de la tenue à la corrosion par l'acier en même temps que de la porosité ouverte.

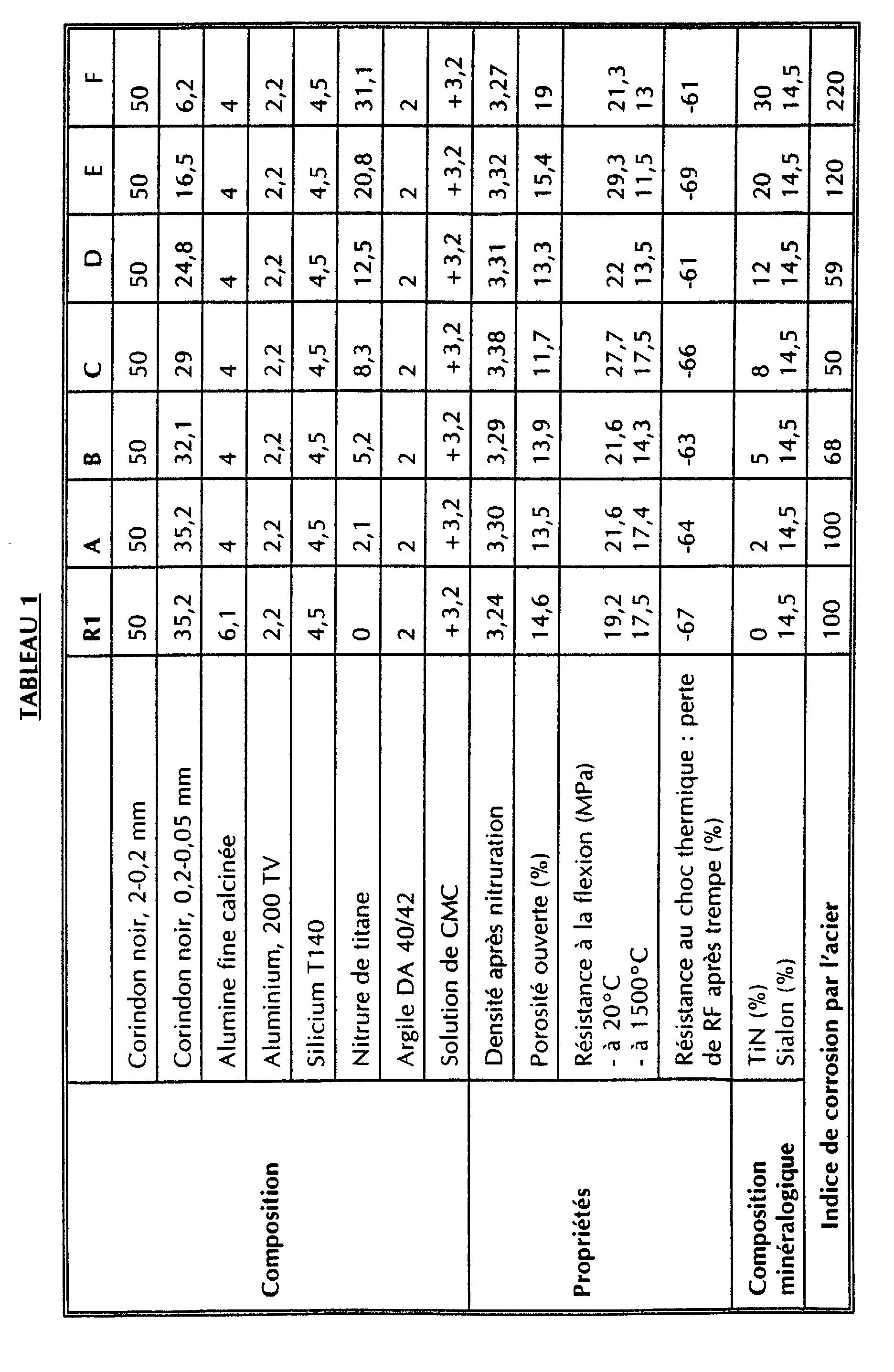

**TABLEAU 2**

| | **R2** | **R3** | **C** |
|---|---|---|---|
| Corindon noir, 2-0,2 mm | 50 | 50 | 50 |
| Corindon noir, 0,2-0,05 mm | 19,5 | 23,8 | 29 |
| Alumine fine calcinée | 7 | 4 | 4 |
| Aluminium 200 TV | 0 | 7,3 | 2,2 |
| Silicium T140 | 0 | 5,3 | 4,5 |
| Poudre de Ti métal | 20,5 | 6,6 | 0 |
| Nitrure de titane | 0 | 0 | 8,3 |
| Argile DA 40/42 | 3 | 3 | 2 |
| Solution de CMC | +3,7 | +3,7 | +3,2 |
| Densité après nitruration | Produits non viables | | 3,38 |
| Résistance à la flexion 20°C (MPa) | Désagrégés au cours de la cuisson | | 27,7 |

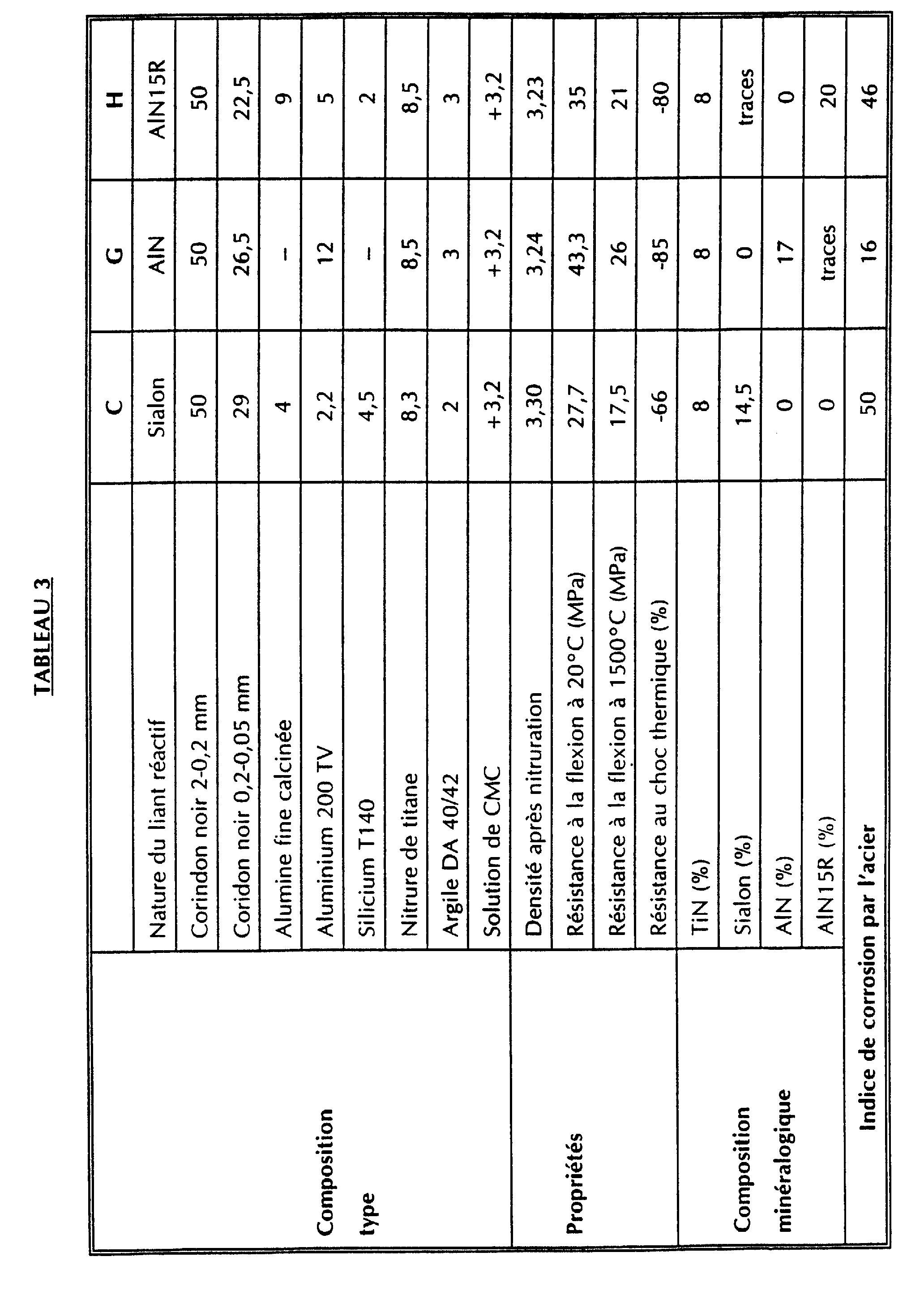

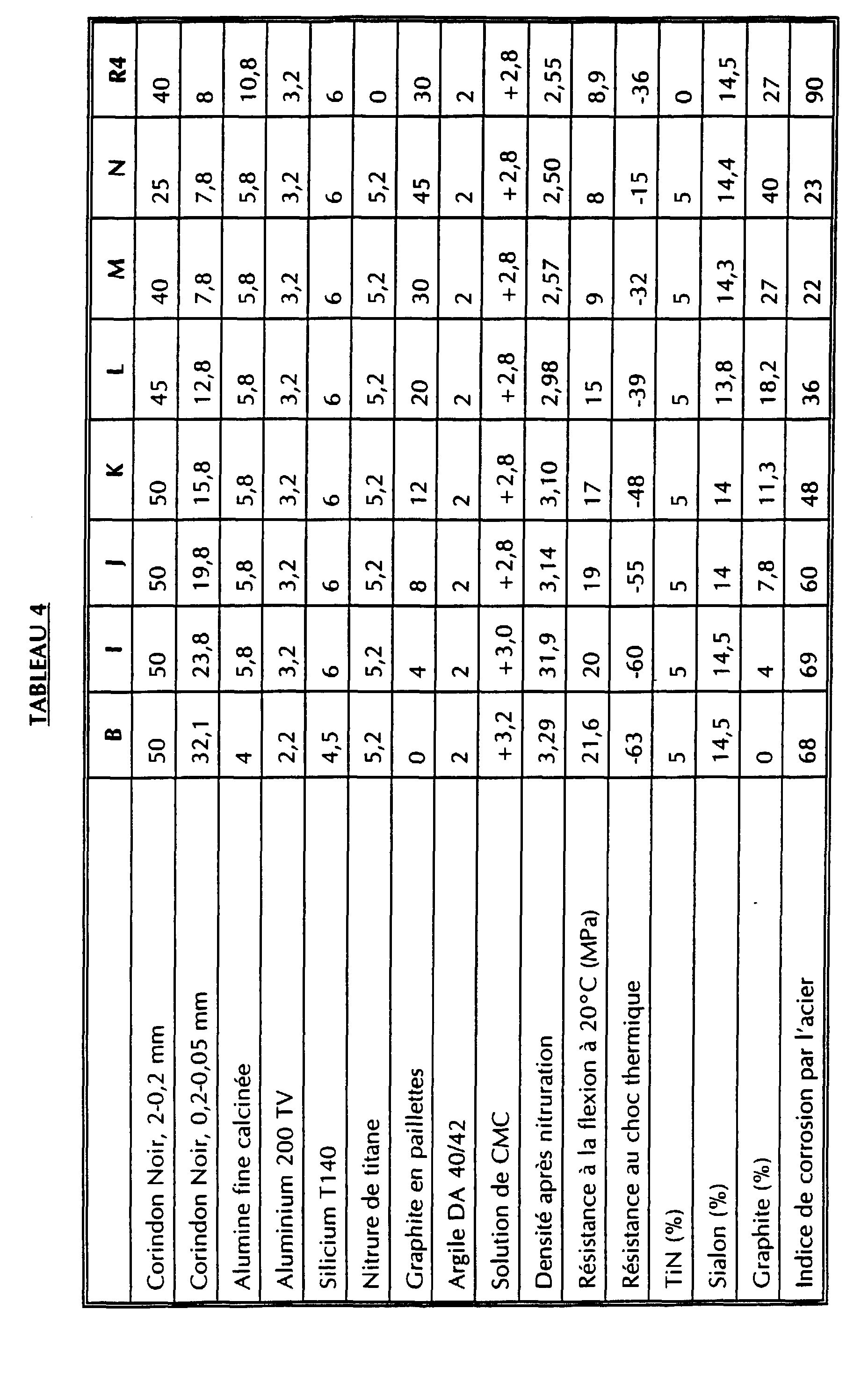

**TABLEAU 5**

| | | **R5** | **O** |
|---|---|---|---|
| **Composition** | Corindon noir, 2-0,2 mm | 50 | 50 |
| | Corindon noir, 0,2-0,05 mm | 26,5 | 26,5 |
| | Aluminium 200 TV | 12 | 9 |
| | TiN (%) | 0 | 3 |
| | BN (%) | 8,5 | 8,5 |
| | Argile DA 40/42 | 3 | 3 |
| | Solution de CMC | +3,2 | +3,2 |
| **Caractéristiques physiques** | Densité après nitruration | 3,11 | 3,16 |
| | Résistance à la flexion à 1500°C (MPa) | 23 | 23,6 |
| | Résistance au choc thermique | -61 | -62 |
| **Composants minéralogiques** | AIN (%) | 17 | 13 |
| | TiN (%) | 0 | 3 |
| | BN (%) | 8 | 8 |
| **Indice de corrosion par l'acier** | | 90 | 70 |

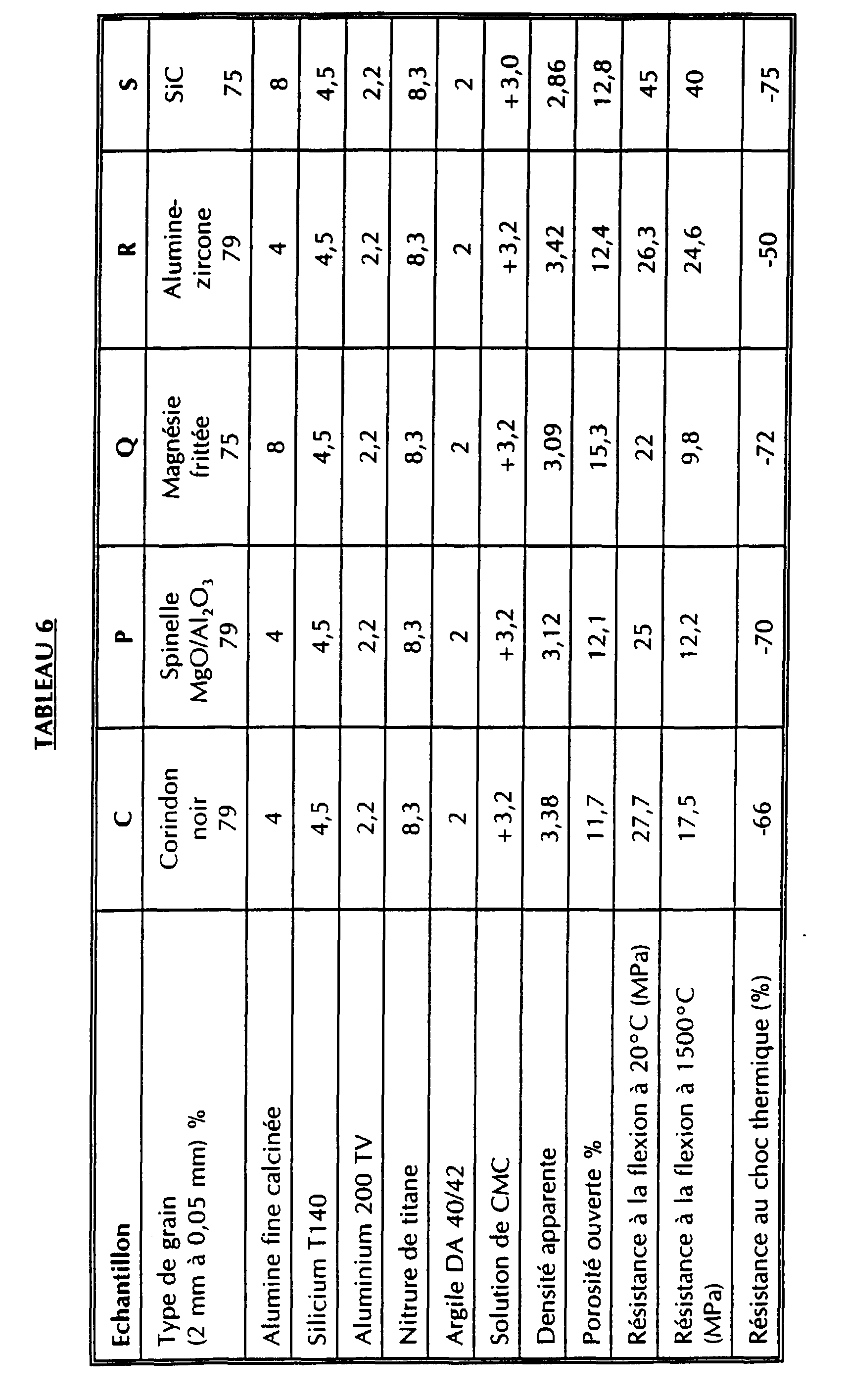

**TABLEAU 7**

| | **R6** | **T** |
|---|---|---|
| Alumine Tabulaire - 325 mesh | 48 | 35,5 |
| Alumine fine calcinée | 14,3 | 14,3 |
| Silicium T140 | 16 | 16 |
| Aluminium 200 TV | 7,7 | 7,7 |
| Nitrure de Titane | 0 | 12,5 |
| Nitrure de Bore | 6 | 6 |
| Graphite en paillettes | 6 | 6 |
| Argile DA 40/42 | 2 | 2 |
| Solution de CMC | +3,0 | +3,4 |
| Densité après nitruration | 2,80 | 2,85 |
| Résistance à la flexion à 20°C (MPa) | 50 | 53 |
| Indice de corrosion par l'acier | 100 | 80 |

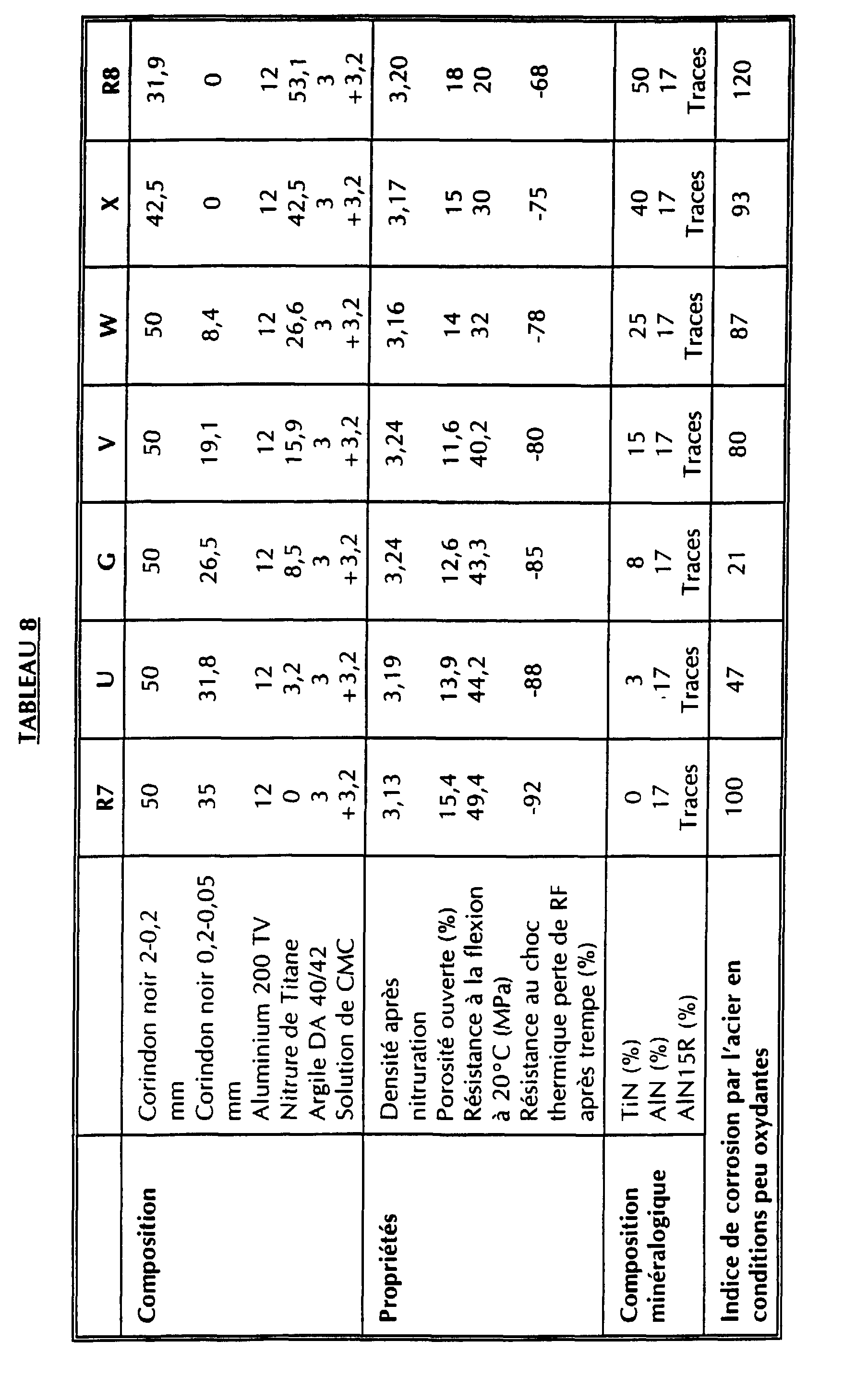

## Revendications

1. Matériaux réfractaires caractérisés en ce qu'ils comprennent, en % en poids :
A] 32 à 87% de particules et/ou grains d'au moins un matériau réfractaire présentant des températures de fusion et de dissociation thermique supérieures à 1700°C, choisi parmi les corindons, la mullite, les matériaux du système alumine-zircone, la magnésie, les zircones pures ou partiellement stabilisées avec la condition que leur grosseur de particules soit d'au moins 50 µm, le spinelle MgO-Al₂O₃, que ces produits soient électrofondus ou frittés ; les matériaux électrofondus présentant une teneur en alumine d'au moins 85 % en poids; les matériaux électrofondus du système alumine-silice-zircone titrant au moins 40 % en alumine et 5 % en zircone ; les oxycarbures d'aluminium des types Al₄O₄C et Al₂OC, les produits à base d'oxynitrure d'aluminium, la bauxite, et les chamottes argileuses réfractaires.
B] 7 à 50% d'une matrice liante formée in situ et constituée majoritairement :
- soit d'un sialon de formule Si_{6-z}Al_{z}O_{z}N_{8-z} où z vaut 0 à 4, comme déterminé à partir d'un diagramme de diffraction de rayons X ;
- soit du nitrure d'aluminium AlN de structure hexagonale et/ou d'au moins un des polytypes de AlN désigné dans la notation de Ramsdell par 2H, 8H, 27R, 21R, 12H et 15R, comme déterminé à partir d'un diagramme de diffraction de rayons X ;
- ou d'un mélange de ces constituants.
C] 2 à 40% d'un matériau à base de nitrure de titane TiN dispersé dans la matrice ; et, facultativement,
D] 0 à 42% de nitrure de bore hexagonal, de carbone amorphe, et/ou de graphite cristallisé dispersé dans la matrice liante.

2. Matériaux selon la revendication 1, caractérisés en ce que le constituant [A] constitue 36 à 68% du poids du matériau.

3. Matériaux selon la revendication 1 ou 2, caractérisés en ce que le constituant [A] a une granulométrie comprise entre 1 µm et 10 mm.

4. Matériaux selon l'une quelconque des revendications 1 à 3, caractérisés en ce que le constituant [C] constitue de 5 à 15% du poids du matériau.

5. Matériaux selon l'une quelconque des revendications 1 à 4, caractérisés en ce que le constituant [A] est formé à raison d'au moins 90% en poids par des grains d'un diamètre compris entre 50 µm et 10 mm et en ce qu'il contient de 12 à 18% de liant [B].

6. Matériau selon l'une quelconque des revendications 1 à 4, caractérisé en ce que le constituant [A] est formé à raison d'au moins 90% en poids par des particules d'un diamètre inférieur à 50 µm et en ce qu'il contient de 30 à 45% de liant [B].

7. Matériau selon l'une quelconque des revendications 1 à 6, caractérisé en ce qu'il contient de 5 à 30% en poids de constituant [D] .

8. Procédé de fabrication de matériaux réfractaires, caractérisé en ce que :
1. On prépare une charge de départ comprenant un mélange des constituants suivants dans les proportions indiquées:
a) 32 à 90% en poids de grains et/ou particules constitués d'un matériau réfractaire dont la température de fusion et la température de dissociation thermique éventuelle sont supérieures à 1700°C ;
b) 6 à 42% en poids d'un mélange de poudres réactives consistant essentiellement en :
1. Dans le cas d'une matrice de sialon
(i) 23 à 90% de poudre de silicium dont au moins 90% des particules ont un diamètre inférieur à 150 µm,
(ii) 0 à 62% d'alumine calcinée dont au moins 90% des particules ont un diamètre inférieur à 20 µm,
(iii) 0 à 28% de poudre d'aluminium dont au moins 90% des particules ont un diamètre inférieur à 80 µm, le total des constituants (i) à (iii) représentant 100% et le rapport des proportions d'aluminium et d'alumine calcinée étant inférieur à 0,7.
2. Dans le cas d'une matrice liante de nitrure d'aluminium
100% de poudre d'aluminium dont au moins 90% des particules ont un diamètre inférieur à 80 µm.
3. Dans le cas d'une matrice liante constituée de l'un des polytypes du nitrure d'aluminium
85 à 25% en poids de poudres de silicium et d'aluminium dans un rapport maximal poudre de Si/poudre Al de 0,8 combinées avec de l'alumine calcinée dans une proportion de 15 à 75% en poids.
c) 2 à 43% de poudre d'un matériau à base de nitrure de titane;
d) 0 à 44% en poids de particules de nitrure de bore hexagonal, de particules de carbone amorphe, de particules de graphite cristallisé ou d'un mélange de celles-ci ;
e) 0 à 3% d'une argile réfractaire séchée et broyée, le total des ingrédients de (a) à (e) faisant 100 % et
f) une petite quantité de liant temporaire ;
2. On met le mélange résultant à la forme désirée par pressage ;
3. On sèche le mélange conformé ; et
4. On cuit le mélange conformé et séché sous une atmosphère à base d'azote à une température de 1300° à 1600°C.

9. Procédé selon la revendication 8, caractérisé en ce que :
l'ingrédient (a) représente 40-75% ; l'ingrédient (b) représente 25-38% lorsque (a) est formé de particules dont au moins 90% sont inférieures à 50 µm et 10-15% lorsque (a) est formé de grains dont au moins 90% sont supérieurs à 50 µm ; et l'ingrédient (d) représente 5-33%.

10. Pièce réfractaire devant être exposée au contact d'un métal en fusion, caractérisée en ce qu'elle est constituée d'un matériau réfractaire comprenant, en % en poids :
A] 32 à 87% de particules et/ou grains d'au moins un matériau réfractaire dont les températures de fusion et de dissociation thermique sont supérieures à 1700°C, choisi parmi les corindons, la mullite, les matériaux du système alumine-zircone, la magnésie, les zircones pures ou partiellement stabilisées avec la condition que leur grosseur de particules soit d'au moins 50 µm, le spinelle MgO-Al₂O₃, que ces produits soient électrofondus ou frittés ; les matériaux électrofondus présentant une teneur en alumine d'au moins 85% en poids; les matériaux électrofondus du système alumine-silice-zircone titrant au moins 40% en alumine et 5% en zircone; les oxycarbures d'aluminium des types Al₄O₄C et Al₂OC, les produits à base d'oxynitrure d'aluminium, la bauxite et les chamottes argileuses réfractaires ;
B] 7 à 50% d'une matrice liante formée in situ et constituée majoritairement :
- soit d'un sialon de formule Si_{6-z}Al_{z}O_{z}N_{8-z} où z vaut 0 à 4, comme déterminé à partir d'un diagramme de diffraction de rayons X ;
- soit du nitrure d'aluminium AlN de structure hexagonale et/ou d'au moins un des polytypes de AlN désigné dans la notation de Ramsdell par 2H, 8H, 27R, 21R, 12H et 15R, comme déterminé à partir d'un diagramme de diffraction de rayons X ;
- ou d'un mélange de ces constituants.
C] 2 à 40% d'un matériau à base de nitrure de titane TiN dispersé dans la matrice ; et, facultativement,
D] 0 à 42% de nitrure de bore hexagonal, de carbone amorphe, et/ou de graphite cristallisé dispersé dans la matrice liante.

11. Pièce selon la revendication 10, caractérisée en ce que le constituant [A] constitue 36 à 68% du poids du matériau.

12. Pièce selon la revendication 10 ou 11, caractérisée en ce que le constituant [A] a une granulométrie comprise entre 1 µm et 10 mm.

13. Pièce selon l'une quelconque des revendications 10 à 12, caractérisée en ce que le constituant [C] constitue de 5 à 15% du poids du matériau.

14. Pièce selon l'une quelconque des revendications 10 à 13, caractérisée en ce que le constituant [A] est formé à raison d'au moins 90% en poids par des grains d'un diamètre compris entre 50 µm et 10 mm et en ce qu'il contient de 12 à 18% de liant [B].

15. Pièce selon l'une quelconque des revendications 10 à 14, caractérisée en ce que le constituant [A] est formé à raison d'au moins 90% en poids par des particules d'un diamètre inférieur à 50 µm et en ce qu'il contient de 30 à 45% de liant [B].

16. Pièce selon l'une quelconque des revendications 10 à 15, caractérisée en ce qu'elle contient de 5 à 30% en poids de constituant [D].

17. L'utilisation, au contact d'un métal en fusion, d'une pièce réfractaire constituée d'un matériau réfractaire comprenant, en % en poids :
A] 32 à 87% de particules et/ou grains d'au moins un matériau réfractaire dont les températures de fusion et de dissociation thermique sont supérieures à 1700°C,
B] 7 à 50% d'une matrice liante formée in situ et constituée majoritairement :
- soit d'un sialon de formule Si_{6-z}Al_{z}O_{z}N_{8-z} où z vaut 0 à 4, comme déterminé à partir d'un diagramme de diffraction de rayons X ;
- soit du nitrure d'aluminium AlN de structure hexagonale et/ou d'au moins un des polytypes de AlN désigné dans la notation de Ramsdell par 2H, 8H, 27R, 21R, 12H et 15R, comme déterminé à partir d'un diagramme de diffraction de rayons X ;
- ou d'un mélange de ces constituants.
C] 2 à 40% d'un matériau à base de nitrure de titane TiN dispersé dans la matrice ; et, facultativement,
D] 0 à 42% de nitrure de bore hexagonal, de carbone amorphe, et/ou de graphite cristallisé dispersé dans la matrice liante.

18. L'utilisation de la revendication 17, caractérisée en ce que le constituant [A] constitue 36 à 68% du poids du matériau.

19. L'utilisation de la revendication 16 ou 17, caractérisée en ce que le constituant [A] a une granulométrie comprise entre 1 µm et 10 mm.

20. L'utilisation selon l'une quelconque des revendications 17 à 19, caractérisée en ce que le constituant [C] constitue de 5 à 15% du poids du matériau.

21. L'utilisation selon l'une quelconque des revendications 17 à 20, caractérisée en ce que le constituant [A] est formé à raison d'au moins 90% en poids par des grains d'un diamètre compris entre 50 µm et 10 mm et en ce qu'il contient de 12 à 18% de liant [B].

22. L'utilisation selon l'une quelconque des revendications 17 à 21, caractérisée en ce que le constituant [A] est formé à raison d'au moins 90% en poids par des particules d'un diamètre inférieur à 50 µm et en ce qu'il contient de 30 à 45% de liant [B].

23. L'utilisation selon l'une quelconque des revendications 17 à 22, caractérisée en ce que le matériau réfractaire contient de 5 à 30% en poids de constituant [D].

## Claims

1. Refractory materials characterized in that they comprise, in % by weight:
A] 32 to 87% of particles and/or grains of at least one refractory material having melting temperature and thermal dissociation temperature greater than 1700°C, this material being chosen from corundums, mullite, materials of the alumina-zirconia system, magnesia, pure or partially stabilized zirconias, with the proviso that their particle size is at least 50 µm, MgO-Al₂O₃ spinel, whether these products are electrically fused or sintered ; electrically fused materials having an alumina content of at least 85% by weight ; electrically fused materials of the alumina-silica-zirconia system containing at least 40% of alumina and 5% of zirconia ; aluminium oxycarbides of the Al₄O₄C and Al₂OC types, aluminium oxynitride-based products, bauxite, and refractory argillaceous chamottes;
B] 7 to 50% of an *in* situ-formed binding matrix consisting mostly:
- either of a sialon of formula Si_{6-z}Al_{z}O_{z}N_{8-z} where z equals 0 to 4, as determined from an X-ray diffraction pattern;
- or of aluminium nitride AIN of hexagonal structure and/or of at least one of the AIN polytypes, denoted in the Ramsdell notation by 2H, 8H, 27R, 21R, 12H and 15R, as determined from an X-ray diffraction pattern;
- or of a mixture of these constituents;
C] 2 to 40% of a material based on titanium nitride TiN dispersed in the matrix; and, optionally,
D] 0 to 42% of hexagonal boron nitride, amorphous carbon, and/or crystallized graphite dispersed in the binding matrix.

2. Materials according to Claim 1, characterized in that constituent [A] constitutes 36 to 68% of the weight of the material.

3. Materials according to Claim 1 or 2, characterized in that constituent [A] has a particle size between 1 µm and 10 mm.

4. Materials according to any one of Claims 1 to 3, characterized in that constituent [C] constitutes from 5 to 15% of the weight of the material.

5. Materials according to any one of Claims 1 to 4, characterized in that constituent [A] is formed in a proportion of at least 90% by weight by grains having a diameter between 50 µm and 10 mm and in that it contains from 12 to 18% of binder [B].

6. Material according to any one of Claims 1 to 4, characterized in that constituent [A] is formed in a proportion of at least 90% by weight by particles having a diameter less than 50 µm and in that it contains from 30 to 45% of binder [B].

7. Material according to any one of Claims 1 to 6, characterized in that it contains from 5 to 30% by weight of constituent [D].

8. Process for manufacturing refractory materials, characterized in that:
1. An initial batch is prepared which comprises a mixture of the following constituents in the proportions indicated:
a) 32 to 90% by weight of grains and/or particles consisting of a refractory material whose melting temperature and possible thermal dissociation temperature are greater than 1700°C;
b) 6 to 42% by weight of a mixture of reactive powders, essentially consisting of:
1. In the case of a sialon matrix
(i) 23 to 90% of silicon powder, at least 90% of the particles of which have a diameter less than 150 µm,
(ii) 0 to 62% of calcined alumina, at least 90% of the particles of which have a diameter of less than 20 µm,
(iii) 0 to 28% of aluminium powder, at least 90% of the particles of which have a diameter less than 80 µm, the total of constituents (i) to (iii) representing 100% and the ratio of the proportion of aluminium to the proportion of calcined alumina being less than 0.7.
2. In the case of a binding matrix of aluminium nitride
100% of aluminium powder, at least 90% of the particles of which have a diameter less than 80 µm.
3. In the case of a binding matrix consisting of one of the polytypes of aluminium nitride
85 to 25% by weight of silicon and aluminium powders in a maximum Si powder/Al powder ratio of 0.8, these powders being combined with calcined alumina in a proportion of from 15 to 75% by weight.
c) 2 to 43% of powder of a material based on titanium nitride;
d) 0 to 44% by weight of particles of hexagonal boron nitride, amorphous carbon particles, crystallized graphite particles or a mixture of these;
e) 0 to 3% of a dried and ground refractory clay, the total of ingredients (a) to (e) making 100%; and
f) a small amount of temporary binder;
2. the resulting mixture is given the desired shape by pressing;
3. the so-shaped mixture is dried; and
4. the so-shaped mixture is fired and dried in a nitrogen-based atmosphere at a temperature of from 1300°C to 1600°C.

9. Process according to Claim 8, characterized in that:
ingredient (a) represents 40-75%; ingredient (b) represents 25-38% when (a) is formed by particles of which at least 90% are less than 50 µm and 10-15% when (a) is formed by grains of which at least 90% are greater than 50 µm; and ingredient (d) represents 5-33%.

10. Refractory component which is to be exposed in contact with a molten metal, characterized in that it consists of a refractory material comprising, in % by weight:
A] 32 to 87% of particles and/or grains of at least one refractory material, the melting temperature and thermal dissociation temperature of which are greater than 1700°C, chosen from corundums, mullite, materials of the alumina-zirconia system, magnesia, pure or partially stabilized zirconias, with the proviso that their particle size is at least 50 µm, MgO-Al₂O₃ spinel, whether these products are electrically fused or sintered ; electrically fused materials having an alumina content of at least 85% by weight ; electrically fused materials of the alumina-silica-zirconia system containing at least 40% of alumina and 5% of zirconia ; aluminium oxycarbides of the Al₄O₄C and Al₂OC types, aluminium oxynitride-based products, bauxite, and refractory argillaceous chamottes;
B] 7 to 50% of an *in situ*-formed binding matrix consisting mostly:
- either of a sialon of formula Si_{6-z}Al_{z}O_{z}N_{8-z} where *z* equals 0 to 4, as determined from an X-ray diffraction pattern;
- or of aluminium nitride AIN of hexagonal structure and/or of at least one of the AIN polytypes, denoted in the Ramsdell notation by 2H, 8H, 27R, 21 R, 12H and 15R, as determined from an X-ray diffraction pattern;
- or of a mixture of these constituents;
C] 2 to 40% of a material based on titanium nitride TiN dispersed in the matrix; and, optionally,
D] 0 to 42% of hexagonal boron nitride, amorphous carbon, and/or crystallized graphite dispersed in the binding matrix.

11. Component according to Claim 10, characterized in that constituent [A] constitutes 36 to 68% of the weight of the material.

12. Component according to Claim 10 or 11, characterized in that constituent [A] has a particle size between 1 µm and 10 mm.

13. Component according to any one of Claims 10 to 12, characterized in that constituent [C] constitutes from 5 to 15% of the weight of the material.

14. Component according to any one of Claims 10 to 13, characterized in that constituent [A] is formed in a proportion of at least 90% by weight by grains having a diameter lying between 50 µm and 10 mm and in that it contains from 12 to 18% of binder [B].

15. Component according to any one of Claims 10 to 14, characterized in that constituent [A] is formed in a proportion of at least 90% by weight by particles having a diameter less than 50 µm and in that it contains from 30 to 45% of binder [B].

16. Component according to any one of Claims 10 to 15, characterized in that it contains from 5 to 30% by weight of constituent [D].

17. The use, in contact with molten metal, of a refractory part comprised of a refractory material comprising, in % by weight:
A] 32 to 87% of particles and/or grains of at least one refractory material, the melting temperature and thermal dissociation temperature of which are greater than 1700°C ;
B] 7 to 50% of an *in situ*-formed binding matrix consisting mostly;
- either of a sialon of formula Si_{6-z}Al_{z}O_{z}N_{8-z} where *z* equals 0 to 4, as determined from an X-ray diffraction pattern;
- or of aluminium nitride AIN of hexagonal structure and/or of at least one of the AIN polytypes, denoted in the Ramsdell notation by 2H, 8H, 27R, 21 R, 12H and 15R, as determined from an X-ray diffraction pattern;
- or of a mixture of these constituents;
C] 2 to 40% of a material based on titanium nitride TiN dispersed in the matrix; and, optionally,
D] 0 to 42% of hexagonal boron nitride, amorphous carbon, and/or crystallized graphite dispersed in the binding matrix.

18. The use of claim 17, characterized in that constituent [A] constitutes 36 to 68% of the weight of the material.

19. The use of claim 16 or 17, characterized in that constituent [A] has a particle size between 1 µm and 10 mm.

20. The use according to any of claims 17 to 19, characterized in that constituent [C] constitutes from 5 to 15% of the weight of the material.

21. The use according to any of claims 17 to 20, characterized in that constituent [A] is formed in a proportion of at least 90% by weight by grains having a diameter between 50 µm and 10 mm and in that it contains from 12 to 18% of binder [B].

22. The use according to any of claims 17 to 21, characterized in that constituent [A] is formed in a proportion of at least 90% by weight by particles having a diameter less than 50 µm and in that it contains from 30 to 45% of binder [B].

23. The use according to any of claims 17 to 22, characterized in that it contains from 5 to 30% by weight of constituent [D].

## Patentansprüche

1. Feuerfeste Materialien, dadurch gekennzeichnet, daß sie folgendes umfassen, in Gewichtsprozent:
[A] 32 bis 87% Teilchen und/oder Körner aus wenigstens einem feuerfesten Material, dessen Schmelztemperatur und thermische Dissoziationstemperatur über 1700°C liegen und das ausgewählt ist aus Korunden, Mullit, Materialien des Systems Aluminiumoxid-Zirconiumoxid, Magnesiumoxid, reinen oder partiell stabilisierten Zirconiumoxiden, mit der Bedingung, daß ihre Teilchengröße wenigstens 50 µm beträgt, Spinell MgO·Al₂O₃, wobei diese Produkte elektrogeschmolzen oder gesintert sind; elektrogeschmolzenen Materialien mit einem Aluminiumoxidgehalt von wenigstens 85 Gew.-%; elektrogeschmolzenen Materialien des Systems Aluminiumoxid-Siliciumoxid-Zirconiumoxid mit einem Gehalt von wenigstens 40% Aluminiumoxid und 5% Zirconiumoxid; Aluminiumoxidcarbiden der Typen Al₄O₄C und Al₂OC, auf Aluminiumoxidnitrid beruhenden Produkten, Bauxit und feuerfesten Ton-Schamotten;
[B] 7 bis 50% einer Bindematrix, die in situ gebildet wird und hauptsächlich aus:
- entweder einem Sialon der Formel Si_{6-z}Al_{z}O_{z}N_{8-z}, wobei z 0 bis 4 beträgt, wie es anhand eines Röntgenbeugungsdiagramms bestimmt wurde; oder
- Aluminiumnitrid AlN mit hexagonaler Struktur und/oder wenigstens einem der Polytypen von AlN, die in der Ramsdell-Schreibweise mit 2H, 8H, 27R, 21R, 12H und 15R bezeichnet werden, wie es anhand eines Röntgenbeugungsdiagramms bestimmt wurde;
- oder einem Gemisch dieser Bestandteile;
besteht;
[C] 2 bis 40% eines Materials auf der Basis von Titannitrid TiN, das in der Matrix dispergiert ist; sowie gegebenenfalls
[D] 0 bis 42% hexagonales Bornitrid, amorpher Kohlenstoff und/oder kristallisierter Graphit, die in der Bindematrix dispergiert sind.

2. Materialien gemäß Anspruch 1, dadurch gekennzeichnet, daß Bestandteil [A] 36 bis 68% des Gewichts des Materials ausmacht.

3. Materialien gemäß Anspruch 1 oder 2, dadurch gekennzeichnet, daß Bestandteil [A] eine Korngröße zwischen 1 µm und 10 mm hat.

4. Materialien gemäß einem der Ansprüche 1 bis 3, dadurch gekennzeichnet, daß Bestandteil [C] 5 bis 15% des Gewichts des Materials ausmacht.

5. Materialien gemäß einem der Ansprüche 1 bis 4, dadurch gekennzeichnet, daß Bestandteil [A] zu wenigstens 90 Gew.-% aus Körnern mit einem Durchmesser zwischen 50 um und 10 mm besteht und daß es 12 bis 18% des Bindemittels [B] enthält.

6. Material gemäß einem der Ansprüche 1 bis 4, dadurch gekennzeichnet, daß Bestandteil [A] zu wenigstens 90 Gew.-% aus Teilchen mit einem Durchmesser von weniger als 50 um besteht und daß es 30 bis 45% des Bindemittels [B] enthält.

7. Material gemäß einem der Ansprüche 1 bis 4, dadurch gekennzeichnet, daß es 5 bis 30 Gew.-% des Bestandteils [D] enthält.

8. Verfahren zur Herstellung feuerfester Materialien, dadurch gekennzeichnet, daß man
(1) eine Ausgangscharge herstellt, die ein Gemisch der folgenden Bestandteile in den angegebenen Anteilen umfaßt:
(a) 32 bis 90 Gew.-% Körner und/oder Teilchen, die aus einem feuerfesten Material bestehen, dessen Schmelztemperatur und gegebenenfalls thermische Dissoziationstemperatur über 1700°C liegen;
(b) 6 bis 42 Gew.-% eines Gemischs reaktiver Pulver, im wesentlichen bestehend aus:
1. im Falle einer Sialonmatrix
(i) 23 bis 90% Siliciumpulver, wovon wenigstens 90% der Teilchen einen Durchmesser von weniger als 150 um haben;
(ii) 0 bis 62% calciniertes Aluminiumoxid, wovon wenigstens 90% der Teilchen einen Durchmesser von weniger als 20 µm haben;
(iii) 0 bis 28% Aluminiumpulver, wovon wenigstens 90% der Teilchen einen Durchmesser von weniger als 80 um haben;
wobei die Bestandteile (i) bis (iii) insgesamt 100% ausmachen und das Verhältnis der Anteile von Aluminium und calciniertem Aluminiumoxid kleiner als 0,7 ist;
2. im Falle einer Bindematrix aus Aluminiumnitrid
100% Aluminiumpulver, wovon wenigstens 90% der Teilchen einen Durchmesser von weniger als 80 µm haben;
3. im Falle einer Bindematrix, die aus einem der Polytypen von Aluminiumnitrid besteht
85 bis 25 Gew.-% Silicium- und Aluminiumpulver in einem maximalen Verhältnis von Si-Pulver/Al-Pulver von 0,8, kombiniert mit calciniertem Aluminiumoxid in einem Anteil von 15 bis 75 Gew.-%;
(c) 2 bis 43% eines Pulvers aus einem Material auf der Basis von Titannitrid;
(d) 0 bis 44 Gew.-% Teilchen von hexagonalem Bornitrid, Teilchen von amorphem Kohlenstoff, Teilchen von kristallisiertem Graphit oder eines Gemischs davon;
(e) 0 bis 3% eines getrockneten und gemahlenen feuerfesten Tones;
wobei die Bestandteile (a) bis (e) insgesamt 100% ausmachen; sowie
(f) eine kleine Menge eines temporären Bindemittels;
(2) das resultierende Gemisch durch Pressen in die gewünschte Form bringt;
(3) das geformte Gemisch trocknet und
(4) das geformte und getrocknete Gemisch unter einer Atmosphäre auf Stickstoffbasis bei einer Temperatur von 1300 bis 1600°C brennt.

9. Verfahren gemäß Anspruch 8, dadurch gekennzeichnet, daß Bestandteil (a) 40-75% ausmacht, Bestandteil (b) 25-38% ausmacht, wenn (a) aus Teilchen besteht, von denen wenigstens 90% kleiner als 50 µm sind, und 10-15% ausmacht, wenn (a) aus Körnern besteht, von denen wenigstens 90% größer als 50 µm sind, und Bestandteil (d) 5-33% ausmacht.

10. Feuerfestes Teil, das mit einem geschmolzenen Metall in Kontakt gebracht werden soll, dadurch gekennzeichnet, daß es aus einem feuerfesten Material besteht, das folgendes umfaßt, in Gewichtsprozent:
[A] 32 bis 87% Teilchen und/oder Körner aus wenigstens einem feuerfesten Material, dessen Schmelztemperatur und thermische Dissoziationstemperatur über 1700°C liegen und das ausgewählt ist aus Korunden, Mullit, Materialien des Systems Aluminiumoxid-Zirconiumoxid, Magnesiumoxid, reinen oder partiell stabilisierten Zirconiumoxiden, mit der Bedingung, daß ihre Teilchengröße wenigstens 50 µm beträgt, Spinell MgO·Al₂O₃, wobei diese Produkte elektrogeschmolzen oder gesintert sind; elektrogeschmolzenen Materialien mit einem Aluminiumoxidgehalt von wenigstens 85 Gew.-%; elektrogeschmolzenen Materialien des Systems Aluminiumoxid-Siliciumoxid-Zirconiumoxid mit einem Gehalt von wenigstens 40% Aluminiumoxid und 5% Zirconiumoxid; Aluminiumoxidcarbiden der Typen Al₄O₄C und Al₂OC, auf Aluminiumoxidnitrid beruhenden Produkten, Bauxit und feuerfesten Ton-Schamotten;
[B] 7 bis 50% einer Bindematrix, die in situ gebildet wird und hauptsächlich aus:
- entweder einem Sialon der Formel Si_{6-z}Al_{z}O_{z}N_{8-z}, wobei z 0 bis 4 beträgt, wie es anhand eines Röntgenbeugungsdiagramms bestimmt wurde; oder
- Aluminiumnitrid AlN mit hexagonaler Struktur und/oder wenigstens einem der Polytypen von AlN, die in der Ramsdell-Schreibweise mit 2H, 8H, 27R, 21R, 12H und 15R bezeichnet werden, wie es anhand eines Röntgenbeugungsdiagramms bestimmt wurde;
- oder einem Gemisch dieser Bestandteile;
besteht;
[C] 2 bis 40% eines Materials auf der Basis von Titannitrid TiN, das in der Matrix dispergiert ist; sowie gegebenenfalls
[D] 0 bis 42% hexagonales Bornitrid, amorpher Kohlenstoff und/oder kristallisierter Graphit, die in der Bindematrix dispergiert sind.

11. Teil gemäß Anspruch 10, dadurch gekennzeichnet, daß Bestandteil [A] 36 bis 68% des Gewichts des Materials ausmacht.

12. Teil gemäß Anspruch 10 oder 11, dadurch gekennzeichnet, daß Bestandteil [A] eine Korngröße zwischen 1 µm und 10 mm hat.

13. Teil gemäß einem der Ansprüche 10 bis 12, dadurch gekennzeichnet, daß Bestandteil [C] 5 bis 15% des Gewichts des Materials ausmacht.

14. Teil gemäß einem der Ansprüche 10 bis 13, dadurch gekennzeichnet, daß Bestandteil [A] zu wenigstens 90 Gew.-% aus Körnern mit einem Durchmesser zwischen 50 µm und 10 mm besteht und daß es 12 bis 18% des Bindemittels [B] enthält.

15. Teil gemäß einem der Ansprüche 10 bis 14, dadurch gekennzeichnet, daß Bestandteil [A] zu wenigstens 90 Gew.-% aus Teilchen mit einem Durchmesser von weniger als 50 µm besteht und daß es 30 bis 45% des Bindemittels [B] enthält.

16. Teil gemäß einem der Ansprüche 10 bis 15, dadurch gekennzeichnet, daß es 5 bis 30 Gew.-% des Bestandteils [D] enthält.

17. Verwendung eines feuerfesten Teils, das aus einem feuerfesten Material, das folgendes in Gewichtsprozent umfaßt, besteht, in Kontakt mit einem geschmolzenen Metall:
[A] 32 bis 87% Teilchen und/oder Körner aus wenigstens einem feuerfesten Material, dessen Schmelztemperatur und thermische Dissoziationstemperatur über 1700°C liegen;
[B] 7 bis 50% einer Bindematrix, die in situ gebildet wird und hauptsächlich aus:
- entweder einem Sialon der Formel Si_{6-z}Al_{z}O_{z}N_{8-z}, wobei z 0 bis 4 beträgt, wie es anhand eines Röntgenbeugungsdiagramms bestimmt wurde; oder
- Aluminiumnitrid AlN mit hexagonaler Struktur und/oder wenigstens einem der Polytypen von AlN, die in der Ramsdell-Schreibweise mit 2H, 8H, 27R, 21R, 12H und 15R bezeichnet werden, wie es anhand eines Röntgenbeugungsdiagramms bestimmt wurde;
- oder einem Gemisch dieser Bestandteile;
besteht;
[C] 2 bis 40% eines Materials auf der Basis von Titannitrid TiN, das in der Matrix dispergiert ist; sowie gegebenenfalls
[D] 0 bis 42% hexagonales Bornitrid, amorpher Kohlenstoff und/oder kristallisierter Graphit, die in der Bindematrix dispergiert sind.

18. Verwendung gemäß Anspruch 17, dadurch gekennzeichnet, daß Bestandteil [A] 36 bis 68% des Gewichts des Materials ausmacht.

19. Verwendung gemäß Anspruch 16 oder 17, dadurch gekennzeichnet, daß Bestandteil [A] eine Korngröße zwischen 1 µm und 10 mm hat.

20. Verwendung gemäß einem der Ansprüche 17 bis 19, dadurch gekennzeichnet, daß Bestandteil [C] 5 bis 15% des Gewichts des Materials ausmacht.

21. Verwendung gemäß einem der Ansprüche 17 bis 20, dadurch gekennzeichnet, daß Bestandteil [A] zu wenigstens 90 Gew.-% aus Körnern mit einem Durchmesser zwischen 50 µm und 10 besteht und daß es 12 bis 18% des Bindemittels [B] enthält.

22. Verwendung gemäß einem der Ansprüche 17 bis 21, dadurch gekennzeichnet, daß Bestandteil [A] zu wenigstens 90 Gew.-% aus Teilchen mit einem Durchmesser von weniger als 50 µm besteht und daß es 30 bis 45% des Bindemittels [B] enthält.

23. Verwendung gemäß einem der Ansprüche 17 bis 22, dadurch gekennzeichnet, daß das feuerfeste Material 5 bis 30 Gew.-% des Bestandteils [D] enthält.
